# EUROPEAN PATENT SPECIFICATION

(11) **EP 3 260 643 B1**
(45) Date of publication and mention of the grant of the patent: **29.04.2020**
(21) Application number: 17177188.4
(22) Date of filing: 21.06.2017
(51) Int. Cl.: E05F 15/67

(54) **SHUTTLE FOR SHUTTER DOOR SYSTEM AND SHUTTER DOOR SYSTEM**
LAUFWAGEN FÜR ROLLTORSYSTEM UND ROLLTORSYSTEM
CHARIOT POUR SYSTÈME DE PORTE DE VOLETS ET SYSTÈME DE PORTE DE VOLETS

(30) Priority: 22.06.2016 GB 201610924
(43) Date of publication of application: 27.12.2017
(73) Proprietor: Albert Jagger Limited, Walsall West Midlands WS2 8HG (GB)
(72) Inventor: FRYER, Terry, Bloxwich Walsall WS3 2XY (GB)
(74) Representative: Somervell, Thomas Richard

(56) References cited:
- WO-A1-2009/049379
- US-A1- 2005 120 629
- US-B1- 8 438 784

## Description

### Field of the Invention

The present invention relates to a shuttle and a system for opening and closing a shutter door, especially for opening and closing a shutter door on a vehicle.

### Background to the Invention

There is a desire for an automatic shutter door for use on delivery vehicles, especially multi-drop vehicles. A solution has been provided under the CENTADRIVE® brand as described in the Journal of the Chartered Institute of Logistics & Transport (Focus, May 2009 p38-40, "British Innovation Opens New Doors to Success"). The known system provides remote controlled raising and lowering of a shutter door using a shuttle that moves along a track. This system provides a great many benefits over traditional doors: the delivery process can be quicker since the driver can begin opening the door from a distance; it reduces the risk of driver injury through "parachute jumping" to pull the shutter down; and it is easy to use thereby increasing security since there is less temptation to leave the door open and unattended. Nonetheless, the logistics market is highly competitive so improvements are continually sought.

US 2005/120629A1 discloses a driving system for a garage door and comprises a track cantilevered to a wall and having an open side that faces upward. A driving assembly is movably received in the track and driven by a motor which is located to the other end of the track. The driving assembly comprises a base and a cover which is mounted to the base. A quick release mechanism includes a retaining member and a pulling member, wherein the retaining member is located between the base and the cover. A top plate extends from a top of the pulling member and movably extends through the window of the cover. A rope has an end fixed to a hole of the top plate such that when the user pulls the rope, the top plate is removed and a tongue is disengaged from the recess of a connection member.

WO 2009/049379A1 discloses a drive assembly for a door, gate or barrier, including: a rail or track; a trolley for connection to the door, gate or barrier, the trolley mountable to run along the rail or track; a longitudinal drive means comprising a chain or belt, connectable in a closed loop arrangement around or within the rail or track; the trolley provided with an engagement means for selective engagement between the trolley and the longitudinal drive means. Trolley can be selectively disconnected from connector shuttle (eg. for manual operation of the garage door, such as in the case of a power failure) by pulling down on release handle of a cord attached to the end of clutch lever, resulting in the withdrawal of shaft from part against the spring bias, thus allowing the trolley to run freely in track.

An object of the present invention is to provide an improved shuttle and system for opening and closing a shutter door, especially on a delivery vehicle.

### Summary of the Invention

According to a first aspect of the present invention there is provided a shuttle according to claim 1.

The location of the locking mechanism in a transverse plane within the height of the channel for the drive belt allows the shuttle to be slimmer, i.e. having reduced height when compared to the known CENTADRIVE® system. This, in turn means the height of the track can be reduced. In the known CENTADRIVE® system the locking mechanism was mounted on the outside of the shuttle, and thereby increased its overall size. In the present invention the locking mechanism and the drive belt are side by side inside the shuttle. A small reduction in size can have significant benefits in everyday use. The system is typically mounted in a roof of a delivery truck and the space available for carrying the load is critical. The reduction in height of the shuttle means it can be fitted into a smaller space in a delivery truck and thus the system can be fitted into a wider variety of vehicles.

The inventor considered reducing the thickness of the drive belt in order to reduce the overall size of the shuttle. However, this approach was rejected since it would impact on the strength of the drive belt.

The locking mechanism allows the belt drive and the shuttle to be disengaged. This is important for maintenance, and allows the shuttle to be moved manually until repairs can be carried out.

An advantage of the present invention is that the shuttle can be disassembled in situ on the track without damage to the drive belt.

The location of the engaging means in a transverse plane within the height of the channel for the drive belt allows the shuttle to be reduced in height.

The shuttle has a first end nearest the shuttle door in use and a second end opposite the first end, and the locking mechanism is located between the engaging means and the second end of the shuttle. This helps to allow the locking mechanism and the engaging means to be packaged in a smaller longitudinal space than in the known CENTADRIVE® system.

The engaging means may be configured to pivot from the engaged position to the disengaged position.

The pivot of the engaging means may be located at an end of the engaging means nearest the first end of the shuttle. This helps with packaging the engaging means in the transverse plane and allows the engaging means to be shorter in length when compared to the known CENTADRIVE® system.

A biasing means may be provided to bias the engaging means away from the channel.

The locking mechanism is configured to engage with an end of the engaging means nearest the second end of the shuttle. This has the advantage of locking the engaging means in the engaged position.

A biasing element may be provided to bias the locking mechanism toward the engaging means to lock the engaging means in the engaged position.

A releasing means is provided, at least in part, outside the shuttle, for releasing the engaging means from the engaged position. This has the advantage of allowing the engaging means to be released without disassembling the shuttle.

The releasing means is configured to push on the locking mechanism such that the locking mechanism is pivoted away from the engaging means to release the engaging means from the engaged position. This has the advantage that the releasing means is not rigidly fixed to the locking mechanism. Further, the releasing means is shorter in length when compared to the known CENTADRIVE® system.

The releasing means may comprise a button for releasing the engaging means from the engaged position when the button is pressed.

The releasing means is configured to pull on the locking mechanism such that the locking mechanism is pivoted away from the engaging means to release the engaging means from the engaged position.

The releasing means may comprise a cable for releasing the engaging means from the engaged position when the cable is pulled. This has the advantage that the engaging means can be released when the shutter door is closed and direct access to the shuttle is not possible.

The shuttle may comprise a cam located in the transverse plane for moving the engaging means to the engaged position. This has the advantage of allowing the shuttle to be reduced in height.

The cam may be configured to be eccentrically rotated to move the engaging means.

The cam may be configured to be biased away from the engaging means by a biasing component.

The shuttle may comprise an attachment means, and the biasing component and the biasing means may be attached to the attachment means.

The shuttle may comprise a base plate for sliding along a groove in the track. This has the advantage of preventing "snaking" of the shuttle. Further, there is reduced wear on the shuttle when compared to the known CENTADRIVE® system. The shuttle is also easier to fit to the track and runs along more smoothly.

The shuttle may comprise a top plate and the base plate, the top plate and the base plate may be spaced apart and parallel to one another and, in use, the base plate may be located closer to the track than the top plate. This helps protect the components located between the top plate and the bottom plate from any damage.

The locking mechanism may be located between the top plate and the base plate.

The channel may be located between the top plate and the base plate.

The engaging means may be located between the top plate and the base plate.

The top plate and/or the base plate may be made from plastics.

The top plate and/or the base plate may be made from nylon plastics. This has the advantage of being a relatively light material.

The shuttle may comprise a shuttle eye for linking to the shutter door.

The shuttle may comprise a shuttle eye mount for attaching the shuttle eye.

The shuttle eye mount may be located in the transverse plane. This has the advantage of allowing the shuttle to be reduced in height.

The shuttle eye mount may be located between the top plate and the base plate.

The shuttle eye mount may be aluminium. This has the advantage of being a relatively light material.

The shuttle may comprise a support block in the transverse plane.

The support block may be located between the top plate and the base plate.

The support block may be aluminium. This has the advantage of being a relatively light material.

The biasing element may be attached to the locking mechanism and the support block.

The engaging means may comprise a tooth clamp.

The locking mechanism may comprise a kicker lock.

According to a second aspect of the present invention there is provided a system for use with a shutter door, comprising:
a shuttle as described above, and
a drive belt configured to run through the channel, engage with the shuttle in the engaged position and disengage from the shuttle in the disengaged position.

The drive belt may be a motorised drive belt.

The drive belt may be a toothed drive belt. This gives a strong engagement so the drive belt does not slip when pulling the shuttle.

The system may comprise a track having a length. This allows the shuttle to move in a controlled manner to open and close the shutter door.

The track may be aluminium. This has the advantage of being a relatively light material.

The track may be black anodised aluminium.

The track may comprise a base having two rails extending perpendicularly from the base.

The drive belt may extend along the track.

The height of the channel may correspond to at least 50% of the height of the track.

The height of the drive belt may correspond to at least 50% of the height of the track. This has the advantage of a reduction in the height of the track whilst still retaining the strength of the drive belt when compared to the known CENTADRIVE® system.

The system may comprise a shutter door.

According to a third aspect of the present invention there is provided a vehicle having the system of the second aspect.

### Brief Description of the invention

Embodiments of the invention will now be described with reference to the accompanying figures in which:
Figure 1A shows a bottom view of a system having a shuttle for use with a shutter door in accordance with an embodiment of the invention;
Figure 1B shows a side view of the system of Figure 1A;
Figure 2A shows a cut away bottom view of the shuttle of Figure 1A;
Figure 2B shows a side view of the shuttle of Figure 1A;
Figure 2C shows an end view of the shuttle of Figure 1A;
Figure 2D shows a perspective view of a drive belt of the system of Figure 1A;
Figure 3 shows the track of Figure 1A;
Figure 4A shows a top view of a vehicle comprising the system of Figure 1A; and
Figure 4B shows an end view of a vehicle comprising the system of Figure 1A.

### Description of the embodiments of the invention

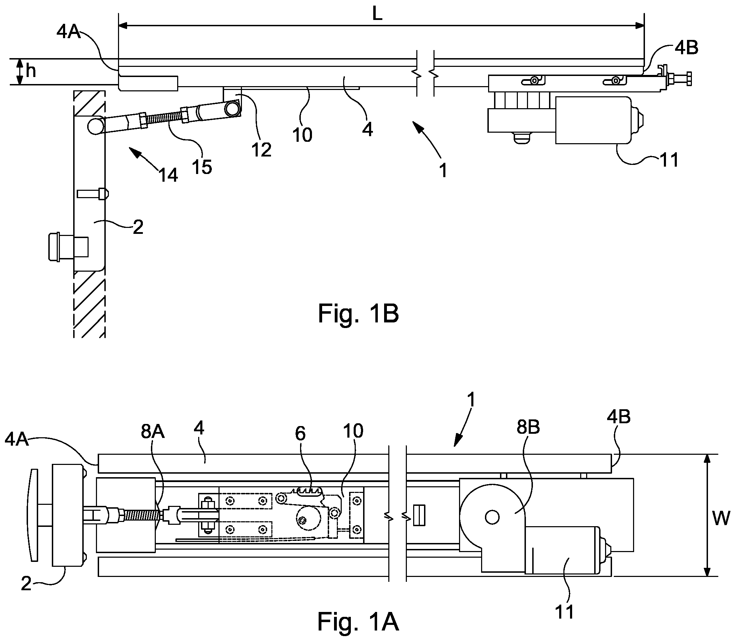

Referring to Figures 1A and 1B there is provided a system 1 for opening and closing a shutter door 2 comprising a track 4, a motorised drive belt 6 and a shuttle 10. Figure 1A is a view of the system 1 from below and shows the width w of the track 4. Figure 1B is a side view and shows the elongate track 4 of length I and height h. The length, the width and the height of the track 4 are mutually perpendicular.

The drive belt 6 extends along the length of the track 4 and has a height measured in the same direction as the height of the track 4. In embodiments, the drive belt 6 has a height of from 1 to 3 cm. The track 4 has a first end 4A nearest the door 2 in use and a second end 4B opposite the first end 4A. The drive belt 6 is located around a first pulley 8A located at the first end 4A of the track 4 and a second pulley 8B located at the second end 4B of the track 4.

In use, the track 4 is fixed to roof bars in a roof of a delivery vehicle. The length of the track 4 will be determined by the amount of travel required to open and close the door 2. When employed with a delivery vehicle, the length of the track 4 is likely to be from 3 to 4 metres. The track 4 must be wide enough to accommodate the width of the shuttle 10.

The shuttle 10 comprises a shuttle eye 12, which allows the shuttle 10 to be coupled to a door assembly 14, i.e. the shuttle eye 12 allows the shuttle 10 to be linked to the door 2. The door assembly 14 comprises the door 2 and a fork end linkage 15. The fork end linkage 15 attaches the door 2 to the shuttle eye 12. Typically the door 2 will be raised to open it and lowered to close it. However, the system 1 could be used in a different orientation if desired.

In use, the shuttle 10 is pulled by the drive belt 6 along the track 4 in a first direction towards the second end 4B of the track 4 (to the right in Figure 1B), and thereby pulls the door 2 upwards to open it. To close the door 2, the shuttle 10 is pulled by the drive belt 6 in a second direction, opposite to the first direction (to the left in Figure 1B). The drive belt 6 is moved along the track 4 by a motor 11 located at the second end 4B of the track 4 which rotates the second pulley 8B.

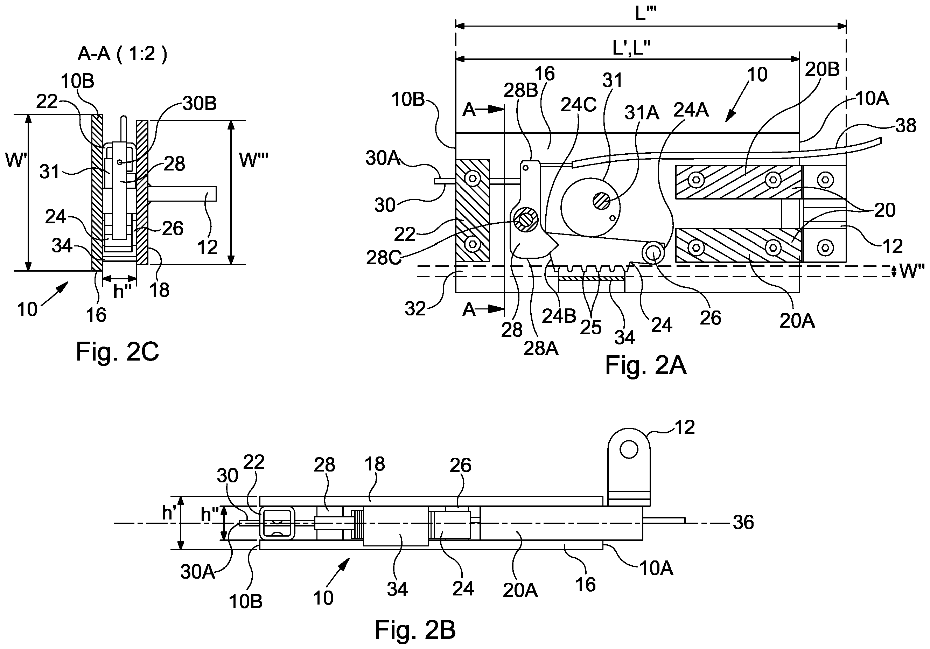

Figures 2A-2C show the shuttle 10 in greater detail without the drive belt 6 for clarity. Figure 2C is a cross section view taken through line A-A of Figure 2A. The shuttle 10 has a length I', a height h' and a width w'. As seen in Figure 2B, the shuttle 10 comprises a base plate 16 and a top plate 18 that are spaced apart by metal blocks 20A, 20B (see Figure 2A) at a first end 10A of the shuttle 10 (the end of the shuttle 10 nearest the door 2 in use). The metal blocks 20A, 20B form a shuttle eye mount 20 at the first end 10A of the shuttle 10. The length I' of the shuttle 10 does not include the shuttle eye mount 20 which extends outwardly beyond the bottom plate 16 and top plate 18. The length of the shuttle 10 including the shuttle eye mount 20 is I"'. The height h' of the shuttle 10 does not include the shuttle eye 12 which extends upwardly beyond the top plate 18.

Further, at a second end 10B of the shuttle 10 (i.e. opposite the first end 10A of the shuttle 10) there is provided a support block 22 which also holds the base plate 16 and the top plate 18 apart. The base plate 16 and the top plate 18 are spaced apart and parallel to one another and, in use, the base plate 16 is located closer to the track 4 than the top plate 18. The base plate 16 and the top plate 18 are made from nylon plastics.

In preferred embodiments, the shuttle 10 has a length l' of 200 mm. The shuttle 10 including the shuttle eye mount 20 has the length l"' of 227mm. In preferred embodiments, the shuttle 10 has a width w' of 85mm. In preferred embodiments, the shuttle 10 has a height h' of 34mm. This is significantly less than the height of 47mm of the shuttle in the known CENTADRIVE® product.

The bottom plate 16 has a width w' and the top plate 18 has a width w"'. The bottom plate 16 is wider than the top plate 18. In preferred embodiments, the bottom plate has a width w' of 93mm and the top plate has a width w'" of 85mm. In preferred embodiments, the bottom plate 16 and the top plate 18 have a length I' of 200mm. The channel 32 has the length I" of 200mm.

The shuttle eye 12 is mounted on the shuttle eye mount 20 adjacent the top plate 18. The shuttle eye mount 20 and the support block 22 are made from aluminium. The shuttle eye 12 is made from stainless steel.

Referring to Figure 2A, a tooth clamp 24 (engaging means) is mounted between the base plate 16 and the top plate 18 and is moveable about a pivot 26 from an engaged position to a disengaged position. The pivot 26 is located at a first end 24A of the tooth clamp 24 (i.e the end of the tooth clamp 24 nearest the first end 10A of the shuttle 10).

The tooth clamp 24 is shown in the engaged position and is held in place by a kicker lock 28 (locking mechanism). In other embodiments, a rotary latch could be used instead of the kicker lock. The kicker lock 28 is mounted between the base plate 16 and the top plate 18. There is a releasing means 30 having a button 30A to release the tooth clamp 24 from the engaged position by interacting with the kicker lock 28. The button 30A, and at least part of the releasing means 30, is located outside the shuttle 10 at the second end 10B of the shuttle 10. The kicker lock 28 allows switching between the engaged position where the shuttle 10 is engaged with the drive belt 6 and the disengaged position where the shuttle 10 is disengaged from the drive belt 6, such that movement of the shuttle 10 along the track 4 by the drive belt 6 can only occur when in the engaged position. The kicker lock 28 is located between the tooth clamp 24 and the second end of the shuttle 10B of the shuttle 10. The kicker lock 28 has a first end 28A that in use, engages with a second end 24B of the tooth clamp 24 (i.e. the opposite end of the tooth clamp 24 from where the pivot 26 is located). The kicker lock 28 has a second end 28B opposite the first end 28A. The tooth clamp 24 has a recess 24C in the second end 24B of the tooth clamp 24. The first end 28A of the kicker lock 28B is engaged in the recess 24C when the tooth clamp 24 is in its engaged position.

A cam 31 is mounted between the base plate 16 and the top plate 18 and is used to move the tooth clamp 24 to the engaged position. The pivot of the cam 31 is off centre such that the cam 24 can be rotated eccentrically to move the tooth clamp 24 to the engaged position.

The shuttle 10 has a channel 32 that extends along the length I' of the shuttle 10 for the drive belt 6 to run through. The channel 32 has a length I" (equal to I'), a height h" and a width w". The size and shape of the channel 32 accommodates the size and shape of the drive belt 6. That is, the drive belt 6 has a height that is less than or equal to the height h" and a width that is less than or equal to the width w". The length of the drive belt 6 is much longer than the shuttle 10 length I' (and the channel length I") because it must run along the track 4 to be attached to the pulleys 8A, 8B and driven by the motor 11.

In preferred embodiments, the channel 32 has a height h" of 22mm. In preferred embodiments, the drive belt 6 has a height of 20mm.

The shuttle 10 has a guide 34 that extends partially along the length I' of the shuttle 10. The channel 32 is defined by the guide 34, the base plate 16 and the top plate 18. When the drive belt 6 is in position on the shuttle 10 (i.e. the drive belt 6 is located between the guide 34 and the tooth clamp 24) the shuttle 10 can be engaged with the drive belt 6 in the engaged position. That is, when the tooth clamp 24 is in the engaged position, the drive belt is sandwiched between the guide 34 and the tooth clamp 24 such that the drive belt 6 is locked in place with respect to the shuttle 10.

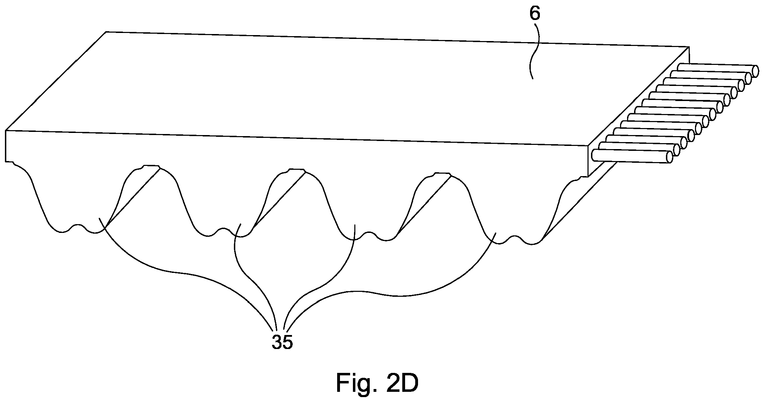

Figure 2D shows a close up view of part of the drive belt 6. The drive belt 6 is a toothed drive belt having teeth 35 which correspond to teeth 25 on the tooth clamp 24. This gives a strong engagement so the drive belt 6 does not slip when pulling the shuttle 10.

Referring to Figure 2B, the kicker lock 28 is located in a transverse plane 36 of the shuttle 10. The transverse plane 36 is located within the height h" of the channel 10. The transverse plane 36 extends perpendicularly to the direction of travel of the drive belt 6 (i.e. the first or second direction) and perpendicularly to the height h" of the channel 32. The transverse plane 36 is parallel to the planes of the base plate 16 and the top plate 18 and is located between the planes of the base plate 16 and the top plate 18.

In addition, the tooth clamp 24, the shuttle eye mount 20, the support block 22, and the cam 31 are all located in the transverse plane 36.

The tooth clamp 24, the kicker lock 28, the shuttle eye mount 20, the support block 22, the cam 31 and the channel 32 are all located between the base plate 16 and the top plate 18.

To insert the drive belt 6 into the channel 32 of the shuttle 10, the tooth clamp 24 must first be in the disengaged position. To move the tooth clamp 24 to the disengaged position, the releasing means 30 is activated by pressing the button 30B such that the releasing means 30 pushes on the kicker lock 28 at the second end 28B. The kicker lock 28 is centrally pivoted (i.e. the first end 28A and the second end 28B pivot in opposite directions around a pivot point 28C located between them). This means that when the releasing means 30 pushes on the second end 28B of the kicker lock 28B, the first end 28A of the kicker lock 28B is pivoted away from the second end 24B of the tooth clamp 24 and the kicker lock 28 moves out of the recess 24C of the tooth clamp 24.

The tooth clamp 24 is biased away from the channel 32 by a biasing means (not shown) so that when the kicker lock 28 is not holding the tooth clamp 24 in the engaged position (i.e. locking it in place) then the tooth clamp 24 moves to the disengaged position. The biasing means is attached to an attachment means (not shown) located on the opposite side of the tooth clamp 24 from the channel 32 and between the cam 31 and the first end 10A of the shuttle 10.

When the button 30A is no longer depressed, the first end 28A of the kicker lock 28 moves back towards the tooth clamp 24 and is brought into contact with a flat section in the second end 24B of the tooth clamp 24. This is because the kicker lock 28 is biased by a biasing element (not shown) towards the tooth clamp 24. The biasing element is attached to the second end 28B of the kicker lock 28 and to the support block 22.

The shuttle 10 also has a cable 38 that is attached to the second end 28B of the kicker lock 28A. This cable 38 is attached to a door lock (not shown) and when the cable 38 is pulled towards the first end 10A of the shuttle 10, the kicker lock 28 moves in the same way as described above to release the tooth clamp 24 from its engaged position. Thus, the cable 38 is also a releasing means.

The cam 31 is biased away from the tooth clamp 24 by a biasing component (not shown) and limits the movement of the tooth clamp 24 when it is in its disengaged position. That is, the tooth clamp 24 comes into contact with the cam 31 when the tooth clamp 24 is disengaged from the disengaged position. The biasing component and the biasing means are both attached to the same attachment means.

When the tooth clamp 24 is in its disengaged position, the drive belt 6 can then be inserted into the channel 32 from either the first end 10A or the second end 10B of the shuttle 10. Once the drive belt 6 is in the correct location in the channel 32, the tooth clamp 24 can be moved to its engaged position to engage with the drive belt 6.

To move the tooth clamp 24 to its engaged position, the cam 31 is rotated such that it moves the tooth clamp 24 towards the channel 32. The movement of the cam 31 acts against the force of the biasing means holding the tooth clamp 24 in its disengaged position and pushes the tooth clamp 24 towards the channel 32. The cam 31 is rotated using a tool (such as an Allen key) that can engage with a bolt 31A that is eccentrically located in the cam 31 (i.e. not in the centre of the cam 31). This provides the eccentric rotation of the cam 31 that allows the cam 31 to move against the tooth clamp 24. The bolt 31A is rotatable with respect to the base plate 16 and the top plate 18 and also helps to hold the cam 31 in position in the shuttle 10.

During the movement of the cam 31, the flat section in the second end 24B of the tooth clamp 24 moves with respect to the first end 28A of the kicker lock 28 as the tooth clamp 24 is moved closer to the drive belt until the kicker lock 28 snaps into the recess 20C in the tooth clamp 24. The first end 28A of the kicker lock 28 effectively moves along the flat section in the second end 24B of the tooth clamp 24 until it enters the recess 20C. The movement of the cam 31 brings the tooth clamp 24 into contact with the drive belt 6. Once the tooth clamp 24 is moved to the position such that the first end 28A of the kicker lock 28 is inserted into the recess 20C, the tooth clamp 24 is locked in position against the drive belt 6 (i.e. the tooth clamp 24 is engaged with the drive belt 6 in the engaged position). That is, the biasing element biases the kicker lock 28 towards the tooth clamp 24 to lock the tooth clamp 24 in the engaged position.

The shuttle 10 can be disassembled in situ (i.e. when the shuttle 10 is in position on the track 4) by removing the fixings in the top plate 18. Once the top plate 18 has been removed and the first end 28A of the kicker lock 28 is released from the recess 20C, the drive belt 6 can be removed such that no damage is caused to the drive belt 6. If necessary, the kicker lock 28, tooth clamp 24 and cam 31 can all be removed in situ without causing damage to the drive belt 6.

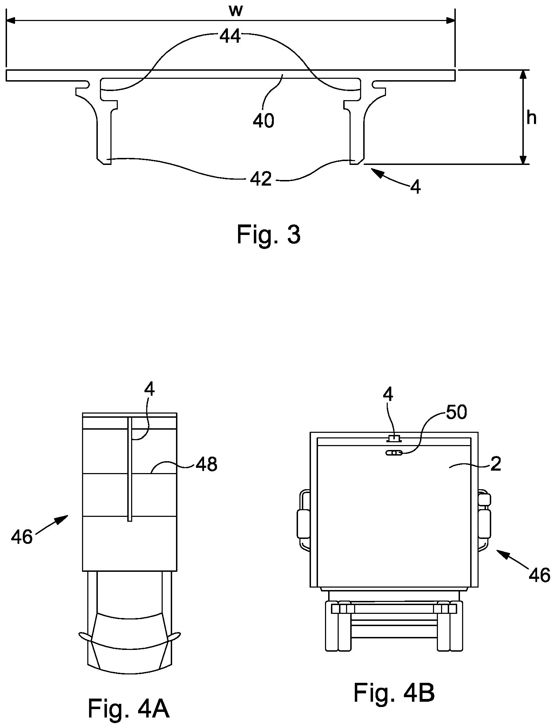

Figure 3 is a cross section of the track 4 of Figure 1. The track 4 is a metal beam. The track 4 is formed from black anodized aluminium of uniform cross-section and comprises a base 40 from which two parallel uprights 42 (rails) extend. The track is formed by extrusion. The uprights 42 are shaped to each include a groove 44 to accommodate the base plate 16 of the shuttle 10. The base plate 16 slides along the grooves 44 in the track 4 as the shuttle 10 moves along the track 4. That is, when the system 1 is in position on roof bars in a roof of a vehicle, the top surface of the base plate 16 will be in contact with, and held in place by, the grooves 44 as the shuttle 10 moves along the track 4. As such, the base plate 16 may be described as a running plate. The inventor has discovered that this prevents "snaking" of the shuttle 10.

The height h" of the channel 32 and the height of the drive belt 6 may be compared to the height h of the track 4. The height h" of the channel 32 is at least 50% of the height h of the track 4. The height of the drive belt 6 is at least 50% of the height h of the track 4. In the known CENTADRIVE® product, the drive belt corresponds to approximately 43% of the height of the track.

Figure 4 is a schematic diagram of a delivery vehicle 46 comprising the system 1 of Figure 1. Figure 4A is a top view and shows the track 4 attached perpendicularly to existing roof bars 48. Figure 4B is a rear view and shows the door 2 having a handle 50 for manual opening and closing of the door 2.

## Claims

1. A shuttle (10) for moving along a track (4) in a first direction to open a shutter door (2) and in a second direction, opposite to the first direction, to close the shutter door (2), comprising:
a locking mechanism (28) for switching between an engaged position where the shuttle (10) is engaged with a drive belt (6) and a disengaged position where the shuttle (10) is disengaged from the drive belt (6), such that movement of the shuttle (10) along the track (4) by the drive belt (6) can only occur when in the engaged position;
an engaging means (24) for engaging and disengaging with the drive belt (6),
a channel (32) for the drive belt (6) to run through;
wherein the locking mechanism (28) and the engaging means (24) are located in a transverse plane (36) of the shuttle (10), the transverse plane (36) being within the height (h") of the channel (32),
wherein the shuttle (10) has a first end (10A) nearest the shutter door (2) in use and a second end (10B) opposite the first end (10A), and wherein the locking mechanism (28) is located between the engaging means (24) and the second end (10B) of the shuttle (10),
wherein the locking mechanism (28) is configured to engage with an end of the engaging means (24) nearest the second end (10B) of the shuttle (10),
wherein a releasing means (30, 38) is provided, at least in part, outside the shuttle (10) for releasing the engaging means (24) from the engaged position;
and the releasing means (30) is configured to push on the locking mechanism (28) such that the locking mechanism (28) is pivoted away from the engaging means (24) to release the engaging means (28) from the engaged position, or
the releasing means (38) is configured to pull on the locking mechanism (28) such that the locking mechanism (28) is pivoted away from the engaging means (24) to release the engaging means (24) from the engaged position.

2. The shuttle (10) according to claim 1, wherein a biasing element is provided to bias the locking mechanism (28) toward the engaging means (24) to lock the engaging means (24) in the engaged position.

3. The shuttle (10) according to either of claims 1 or 2, wherein the shuttle (10) further comprises a cam (31) located in the transverse plane (36) for moving the engaging means (24) to the engaged position, and preferably the cam (31) is configured to be eccentrically rotated to move the engaging means (24).

4. The shuttle (10) according to any preceding claim, wherein the shuttle (10) comprises a base plate (16) for sliding along a groove (44) in the track (4).

5. The shuttle (10) according to claim 4, wherein the shuttle (10) comprises a top plate (18) and the base plate (16), the top plate (18) and the base plate (16) being spaced apart and parallel to one another and, in use, the base plate (16) being located closer to the track (4) than the top plate (18), and preferably the locking mechanism (28), and/or the channel (12), and/or the engaging means (24) is located between the top plate (18) and the base plate (16).

6. The shuttle (10) according to either of claims 4 or 5, wherein the top plate (18) and/or the base plate (16) are made from plastics, preferably nylon plastics.

7. The shuttle (10) according to claim 5, wherein a shuttle eye mount (20), for attaching a shuttle eye (12), and/or a support block (22) is located in the transverse plane (36) and/or between the top plate (18) and the base plate (16).

8. The shuttle (10) according to any preceding claim, wherein the locking mechanism (28) comprises a kicker lock.

9. A system (1) for use with a shutter door (2), comprising:
a shuttle (10) according to any preceding claim, and
a drive belt (6) configured to run through the channel (12), engage with the shuttle (10) in the engaged position and disengage from the shuttle (10) in the disengaged position.

10. The system (1) according to claim 9, wherein the system (1) further comprises a track (4) having a length (I), and preferably the track (4) is aluminium.

11. The system (1) according to claim 10, wherein the height (h") of the channel corresponds to at least 50% of the height (h) of the track (4), and/or the height of the drive belt (6) corresponds to at least 50% of the height (h) of the track (4).

12. A vehicle (46) having the system (1) according to any of claims 9-11.

## Patentansprüche

1. Pendelschlitten (10) zum Bewegen entlang einer Bahn (4) in einer ersten Richtung, um ein Rolltor (2) zu öffnen, und in einer zweiten Richtung, entgegengesetzt zu der ersten Richtung, um das Rolltor (2) zu schließen, der Folgendes umfasst:
einen Verriegelungsmechanismus (28) zum Umschalten zwischen einer eingerückten Stellung, in welcher der Pendelschlitten (10) mit einem Antriebsriemen (6) eingerückt ist, und einer ausgerückten Stellung, in welcher der Pendelschlitten (10) von dem Antriebsriemen (6) ausgerückt ist, so dass eine Bewegung des Pendelschlittens (10) entlang der Bahn (4) durch den Antriebsriemen (6) nur stattfinden kann, wenn er sich in der eingerückten Stellung befindet,
ein Einrückmittel (24) zum Einrücken und Ausrücken mit dem Antriebsriemen (6),
einen Kanal (32), damit der Antriebsriemen (6) hindurchläuft,
wobei der Verriegelungsmechanismus (28) und das Einrückmittel (24) in einer Querebene (36) des Pendelschlittens (10) angeordnet sind, wobei sich die Querebene (36) innerhalb der Höhe (h") des Kanals (32) befindet,
wobei der Pendelschlitten (10) ein erstes Ende (10A), das bei Anwendung dem Rolltor (2) am nächsten ist, und ein zweites Ende (10B), entgegengesetzt zu dem ersten Ende (10A), aufweist und wobei der Verriegelungsmechanismus (28) zwischen dem Einrückmittel (24) und dem zweiten Ende (10B) des Pendelschlittens (10) angeordnet ist,
wobei der Verriegelungsmechanismus (28) dafür konfiguriert ist, mit einem Ende des Einrückmittels (24), das dem zweiten Ende (10B) des Pendelschlittens (10) am nächsten ist, ineinanderzugreifen,
wobei ein Freigabemittel (30, 38), mindestens teilweise, außerhalb des Pendelschlittens (10) bereitgestellt wird, zum Freigeben des Einrückmittels (24) aus der eingerückten Stellung, und wobei das Freigabemittel (30) dafür konfiguriert ist, derart an dem Verriegelungsmechanismus (28) zu drücken, dass der Verriegelungsmechanismus (28) von dem Einrückmittel (24) weg geschwenkt wird, um das Einrückmittel (24) aus der eingerückten Stellung freizugeben, oder das Freigabemittel (38) dafür konfiguriert ist, derart an dem Verriegelungsmechanismus (28) zu ziehen, dass der Verriegelungsmechanismus (28) von dem Einrückmittel (24) weg geschwenkt wird, um das Einrückmittel (24) aus der eingerückten Stellung freizugeben.

2. Pendelschlitten (10) nach Anspruch 1, wobei ein Vorspannelement bereitgestellt wird, um den Verriegelungsmechanismus (28) zu dem Einrückmittel (24) hin vorzuspannen, um das Einrückmittel (24) in der eingerückten Stellung zu verriegeln.

3. Pendelschlitten (10) nach einem der Ansprüche 1 oder 2, wobei der Pendelschlitten (10) ferner einen Nocken (31) umfasst, der in der Querebene (36) angeordnet ist, zum Bewegen des Einrückmittels (24) zu der eingerückten Stellung, und vorzugsweise der Nocken (31) dafür konfiguriert ist, exzentrisch gedreht zu werden, um das Einrückmittel (24) zu bewegen.

4. Pendelschlitten (10) nach einem der vorhergehenden Ansprüche, wobei der Pendelschlitten (10) eine Grundplatte (16) zum Gleiten entlang einer Rille (44) in der Bahn (4) umfasst.

5. Pendelschlitten (10) nach Anspruch 4, wobei der Pendelschlitten (10) eine obere Platte (18) und die Grundplatte (16) umfasst, wobei die obere Platte (18) und die Grundplatte (16) voneinander beabstandet und parallel zueinander sind und, bei Anwendung, die Grundplatte (16) näher zu der Bahn (4) angeordnet ist als die obere Platte (18) und vorzugsweise der Verriegelungsmechanismus (28) und/oder der Kanal (12) und/oder das Einrückmittel (24) zwischen der oberen Platte (18) und der Grundplatte (16) angeordnet ist.

6. Pendelschlitten (10) nach einem der Ansprüche 4 oder 5, wobei die obere Platte (18) und/oder die Grundplatte (16) aus Kunststoff, vorzugsweise Nylon-Kunststoff, hergestellt sind.

7. Pendelschlitten (10) nach Anspruch 5, wobei eine Pendelschlitten-Augenanbringung (20), zum Befestigen eines Pendelschlitten-Auges (12), und/oder ein Stützblock (22) in der Querebene (36) und/oder zwischen der oberen Platte (18) und der Grundplatte (16) angeordnet sind.

8. Pendelschlitten (10) nach einem der vorhergehenden Ansprüche, wobei der Verriegelungsmechanismus (28) eine Stoßverriegelung umfasst.

9. System (1) zur Verwendung mit einem Rolltor (2), wobei das System Folgendes umfasst:
einen Pendelschlitten (10) nach einem der vorhergehenden Ansprüche und
einen Antriebsriemen (6), der dafür konfiguriert ist, durch den Kanal (12) zu laufen, in der eingerückten Stellung mit dem Pendelschlitten (10) einzurücken und in der ausgerückten Stellung von dem Pendelschlitten (10) auszurücken.

10. System (1) nach Anspruch 9, wobei das System (1) ferner eine Bahn (4) umfasst, die eine Länge (1) aufweist, und vorzugsweise die Bahn (4) aus Aluminium besteht.

11. System (1) nach Anspruch 10, wobei die Höhe (h") des Kanals mindestens 50 % der Höhe (h) der Bahn (4) entspricht und/oder die Höhe des Antriebsriemens (6) mindestens 50 % der Höhe (h) der Bahn (4) entspricht.

12. Fahrzeug (46), welches das System (1) nach einem der Ansprüche 9 bis 11 aufweist.

## Revendications

1. Navette (10) destinée à se déplacer le long d'une piste (4) dans une première direction pour ouvrir une porte roulante (2) et dans une deuxième direction opposée à la première direction, pour fermer la porte roulante (2), comprenant :
un mécanisme de verrouillage (28) pour assurer la commutation entre une position engagée, dans laquelle la navette (10) est engagée dans une courroie d'entraînement (6), et une position dégagée, dans laquelle la navette (10) est dégagée de la courroie d'entraînement (6), de sorte que le déplacement de la navette (10) le long de la piste (4) par la courroie d'entraînement (6) est possible uniquement dans la position engagée ;
un moyen d'engagement (24) destiné à s'engager dans la courroie d'entraînement (6) et à se dégager de celle-ci,
un canal (32) permettant la traversée de la courroie d'entraînement (6) ;
dans laquelle le mécanisme de verrouillage (28) et le moyen d'engagement (24) sont situés dans un plan transversal (36) de la navette (10), le plan transversal (36) se situant à l'intérieur de la hauteur (h") du canal (32) ;
dans laquelle la navette (10) comporte une première extrémité (10A) située le plus près de la porte roulante (2) en service, et une deuxième extrémité (10B) opposée à la première extrémité (10A), et dans laquelle le mécanisme de verrouillage (28) est situé entre le moyen d'engagement (24) et la deuxième extrémité (10B) de la navette (10) ;
dans laquelle le mécanisme de verrouillage (28) est configuré pour s'engager dans une extrémité du moyen d'engagement (24), la plus proche de la deuxième extrémité (10B) de la navette (10) ;
dans laquelle un moyen de libération (30, 38) est agencé, au moins en partie, à l'extérieur de la navette (10) pour libérer le moyen d'engagement (24) de la position engagée, le moyen de libération (30) étant configuré pour exercer une poussée sur le mécanisme de verrouillage (28), de sorte que le mécanisme de verrouillage (28) est pivoté à l'écart du moyen d'engagement (24) afin de libérer le moyen d'engagement (24) de la position engagée, ou le moyen de libération (38) est configuré pour exercer une traction sur le mécanisme de verrouillage (28), de sorte que le mécanisme de verrouillage (28) est pivoté à l'écart du moyen d'engagement (24) afin de libérer le moyen d'engagement (24) de la position engagée.

2. Navette (10) selon la revendication 1, dans laquelle un élément de sollicitation est agencé pour solliciter le mécanisme de verrouillage (28) vers le moyen d'engagement (24) afin de verrouiller le moyen d'engagement (24) dans la position engagée.

3. Navette (10) selon les revendications 1 ou 2, dans laquelle la navette (10) comprend en outre une came (31) située dans le plan transversal (36) pour déplacer le moyen d'engagement (24) vers la position engagée, la came (31) étant de préférence configurée pour être tournée de manière excentrique afin de déplacer le moyen d'engagement (24).

4. Navette (10) selon l'une quelconque des revendications précédentes, dans laquelle la navette (10) comprend une plaque de base (16) destinée à coulisser le long d'une rainure (44) dans la piste (4).

5. Navette (10) selon la revendication 4, dans laquelle la navette (10) comprend une plaque supérieure (18) et la plaque de base (16), la plaque supérieure (18) et la plaque de base (16) étant espacées et étant parallèles l'une à l'autre et, en service, la plaque de base (16) étant située plus près de la piste (4) que la plaque supérieure (18), le mécanisme de verrouillage (28) et/ou le canal (12), et/ou le moyen d'engagement (24) étant de préférence situés entre la plaque supérieure (18) et le plaque de base (16).

6. Navette (10) selon l'une des revendications 4 ou 5, dans laquelle la plaque supérieure (18) et/ou la plaque de base (16) sont composées de plastique, de préférence de plastiques de nylon.

7. Navette (10) selon la revendication 5, dans laquelle un support d'oeillet de navette (20), pour fixer un œillet de navette (12), et/ou un bloc de support (22) sont situés dans le plan transversal (36) et/ou entre la plaque supérieure (18) et la plaque de base (16).

8. Navette (10) selon l'une quelconque des revendications précédentes, dans laquelle le mécanisme de verrouillage (28) comprend un verrou à culbuteur.

9. Système (1) destiné à être utilisé avec une porte roulante (2), comprenant :
une navette (10) selon l'une quelconque des revendications précédents ; et
une courroie d'entraînement (6) configurée pour se déplacer à travers le canal (12), pour s'engager dans la navette (10) dans la position engagée et pour se dégager de la navette (10) dans la position dégagée ;

10. Système (1) selon la revendication 9, dans lequel le système (1) comprend en outre une piste (4) ayant une longueur (1), la piste (4) étant de préférence composée d'aluminium.

11. Système (1) selon al revendication 10, dans lequel la hauteur (h") du canal représente au moins 50% de la hauteur (h) de la piste (4), et/ou la hauteur de la courroie d'entraînement (6) représente au moins 60% de la hauteur (h) de la piste (4).

12. Véhicule (46) comportant le système (1) selon l'une quelconque des revendications 9 à 11.
